# EUROPÄISCHE PATENTANMELDUNG

(11) **EP 0 700 715 A2**
(43) Veröffentlichungstag der Anmeldung: **13.03.1996**
(21) Anmeldenummer: 95112123.5
(22) Anmeldetag: 02.08.1995
(51) Int. Cl.: B01J 19/00, B01J 19/14

(54) **Verfahren und Vorrichtung zum Inertisieren von Reaktoren**

(30) Priorität: 12.09.1994 DE 4432344
(71) Anmelder: MESSER GRIESHEIM GmbH, D-60547 Frankfurt (DE)
(72) Erfinder: Lürken, Franz, Dr., D-47906 Kempen (DE)

(57) **Zusammenfassung**

Beim Öffnen von mit Stickstoff als Inertisierungsgas beschickten Reaktoren (1) treten hohe Verluste an Inertisierungsgas auf, die bisher nur durch erhöhte Zufuhr von Inertisierungsgas kompensiert werden konnten. Zwecks Minimierung des Inertisierungsgasverbrauchs beim zeitweiligen Öffnen von Reaktoren (1) wird dem Stickstoff ein weiteres Inertisierungsgas beigemischt. Das Inertisierungsgasgemisch hat dabei eine Dichte, die geringfügig größer ist als die Dichte der Umgebungsluft.

## Beschreibung

Die Erfindung betrifft ein Verfahren zum Inertisieren von Reaktoren nach dem Oberbegriff des Anspruchs 1, sowie eine für die Durchführung des Verfahrens geeignete Vorrichtung.

Leicht brennbare Inhalte von Reaktoren oder anderen Behältern müssen insbesondere dann, wenn die Reaktoren zeitweise geöffnet sind, vor Brand oder Explosion geschützt werden. Zu diesem Zweck wird in solchen Reaktoren Sauerstoffeintrag durch Inertisierung verhindert. Um eine solche Inertisierung so sicher wie möglich zu gestalten, wurden bereits verschiedene Maßnahmen getroffen. So zeigt die DE-OS 39 14 783 eine Vorrichtung, mit der eine wirksame Inertisierung bei zeitweise geöffneten Reaktoren erreicht werden kann. In der noch nicht veröffentlichten deutschen Patentanmeldung P 44 13 074.0-41 wird ein Verfahren vorgestellt, bei dem in einem geöffneten Reaktor ein niedriger konstanter Restsauerstoffgehalt sichergestellt wird, indem die Zufuhr von Inertgas und die Menge des im Kopfraum des Reaktors abgezogenen Kopfraumgases in einem konstanten Verhältnis gehalten werden. Beide Maßnahmen sind sehr gut geeignet, um Explosionen bei zwischenzeitlich geöffneten Reaktoren, die explosionsgefährdete Produkte enthalten, zu verhindern.

Ein generelles Problem beim Inertisieren solcher Reaktoren sind die Verluste an Inertgas, die beim Öffen und während der Beschickung entstehen. Der Gasverlust steigt dabei überproportional im Verhältnis zum Durchmesser der Reaktoröffnung. Da der Anwender in der Regel große, freie Öffnungen wünscht, um ungehindert am Reaktor arbeiten zu können, treten hierbei unerwünschte Verluste an Inertgas auf, die die Sicherheit beeinträchtigen und die nur durch relativ hohe Verbräuche kompensiert werden können.

Der Erfindung liegt daher die Aufgabe zugrunde, ein Verfahren und eine Vorrichtung zu schaffen, mit denen der Inertgasverbrauch drastisch reduziert wird.

Ausgehend von dem im Oberbegriff des Anspruchs 1 berücksichtigten Stand der Technik ist die Aufgabe erfindungsgemäß gelöst mit den im kennzeichnenden Teil des Anspruchs 1 angegebenen Merkmalen.

Mit dem erfindungsgemäßen Verfahren und der Vorrichtung ist es nunmehr möglich, eine Inertisierung zu gewährleisten, bei denen auch bei geöffneten Reaktoren eine sehr hohe Sicherheit mit minimalem Inertgasverlust gegeben ist. Zusätzlich werden die Kosten der Inertisierung deutlich reduziert.

Vorteilhafte Weiterbildungen sind in den Unteransprüchen angegeben.

Im Sinne der Erfindung sind unter dem Begriff Reaktor alle für die Inertisierung in Betracht kommenden Behälter wie beispielsweise Mischer, Silos und Einrichtungen wie Shredder und Mahlanlagen, sowie alle zumindest teilweise offenen zu inertisierenden Systeme zu verstehen.

Die Zeichnung veranschaulicht eine Vorrichtung zur Durchführung des erfindungsgemäßen Verfahrens in schematischer Form.

Es zeigt:
- Fig.1:: Eine für die Durchführung des Verfahrens geeignete Vorrichtung.
- Fig.2:: Eine Abwandlung der Vorrichtung von Figur 1.

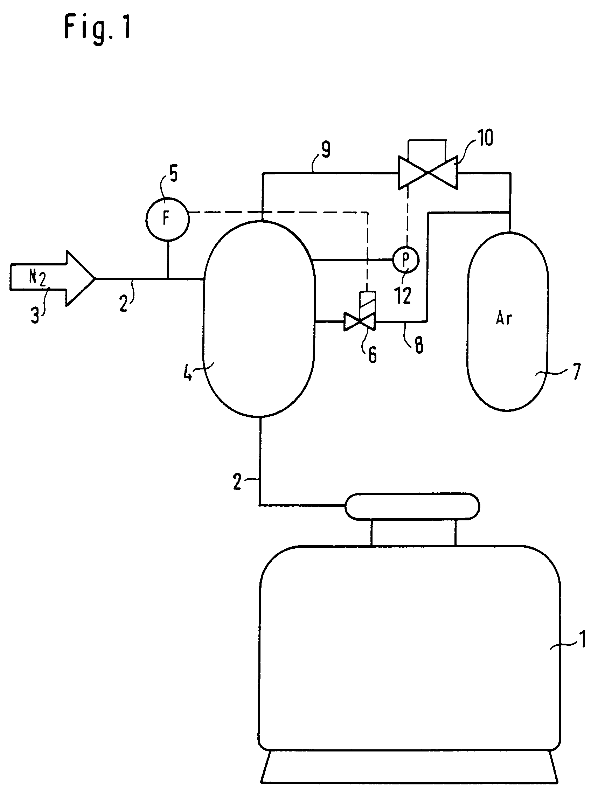

In Figur 1 ist der zu inertisierende Reaktor 1 durch eine Rohrleitung 2 mit einer Entnahmequelle 3 für Stickstoff als Hauptkomponente über ein Mischorgan 4 verbunden. In dem Abschnitt der Rohrleitung 2 zwischen der Entnahmequelle 3 und dem Mischorgan 4 ist ein Durchflußmesser 5 angeordnet, der über eine Steuerleitung, der kein Bezugszeichen zugeordnet ist, mit einer Dosiervorrichtung 6 verbunden ist, die von ihm angesteuert wird und die die Zufuhr eines weiteren Inertisierungsgases als Zusatzkomponente aus der Entnahmequelle 7 über die Rohrleitung 8 in das Mischorgan 4 reguliert. Das Mischorgan 4 ist über eine weitere Rohrleitung 9 mit der Entnahmequelle 7 für die Zusatzkomponente verbunden, die eine Regelvorrichtung 10 aufweist, mit der eine vollständige Versorgung des Mischorgans 4 mit der Zusatzkomponente gewährleistet werden kann. Zu diesem Zweck ist ein Drucksensor 12 vorgesehen, der mit dem Innern des Mischorgans 4 in Verbindung steht und über eine Steuerleitung an die Regelvorrichtung 10 angeschlossen ist. Eine solche Versorgung ausschließlich mit der Zusatzkomponente ist für Notfälle bei Ausfall der Hauptkomponente vorgesehen.

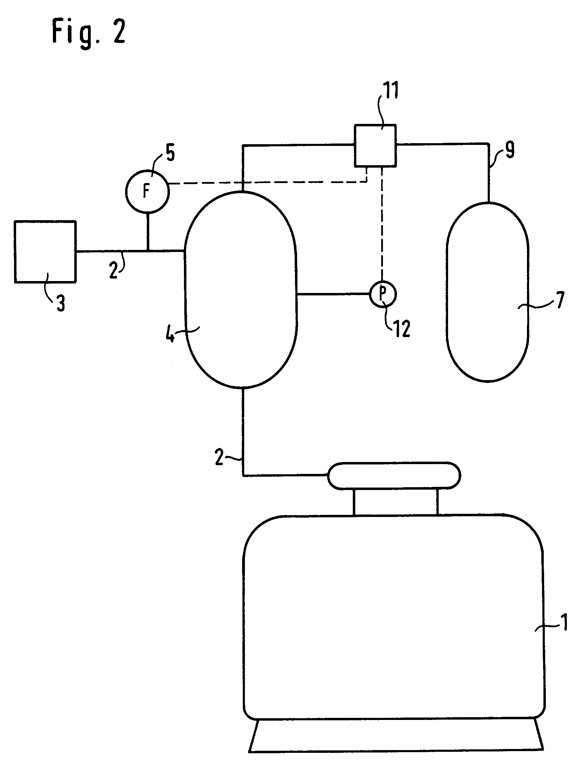

In Figur 2, in der gleichen Vorrichtungselementen dieselben Bezugszeichen zugeordnet sind, ist die Regelvorrichtung 10 in der Rohrleitung 9 unter Wegfall der Rohrleitung 8 mit der Dosiervorrichtung 6 gegen eine Regeleinheit 11 ausgetauscht, die die Funktion der Regelvorrichtung 10 und der Dosiervorrichtung 6 in einer Einheit übernimmt. Sie wird demgemäß durch die Steuerleitung, die mit dem Durchflußmesser 5 in Verbindung steht, angesteuert. Die Regeleinheit 11 besitzt ebenfalls einen Drucksensor 12.

Erfindungsgemäß wird nun der Reaktor 1 mit einem Inertisierungsgasgemisch vor Brand oder Explosion geschützt, das eine höhere Dichte hat als die den Reaktor 1 umgebende Luft. Hierbei geht die Erfindung davon aus, daß mit Stickstoff, welcher leichter als Luft ist, inertisiert wird. Stickstoff ist preiswert und kann leicht zur Verfügung gestellt werden. Geeignete Gase als Zusatzkomponente zur Erhöhung der Dichte des Inertisierungsgasgemisches sind beispielsweise Ar, CO₂, Xe, SF₆ und höhere Edelgase. Die Auswahl der Zusatzkomponente erfolgt selbstverständlich so, daß sie unter den gegebenen Bedingungen kein Reaktionspartner ist. Wird der Reaktor 1, der zu verarbeitende, leicht brennbare Güter enthält, geöffnet, so wird auch zu diesem Zeitpunkt eine sichere Inertisierung gewährleistet, da sich das Inertisierungsgas aufgrund seiner gegenüber der Umgebungsluft größeren Dichte schützend über die leicht brennbare Oberfläche des zu inertisierenden Produktes legt. Dies wird gewährleistet, indem dem Reaktor 1 Stickstoff über ein Mischorgan 4, das beispielsweise als Pufferbehälter ausgebildet sein kann, zugeführt wird, welchem zur Erhöhung der Inertisierungsgasdichte eine zweite Komponente aus der Entnahmequelle 7 beigemischt wird. Die Entnahmequelle 3 für den Stickstoff ist vorzugsweise eine on-site-Anlage, beispielsweise eine PSA-Anlage. Es kann aber auch ein Flüssiggastank eingesetzt werden. Zur Erhöhung der Inertisierungsgasdichte wird aus der Entnahmequelle 7, die eine zweite Komponente höherer Dichte als der des Stickstoffes, in diesem Fall Argon, enthält, zusätzlich Gas in das Mischorgan 4 eingespeist. Die Menge an zugegebenem Argon kann für wenig schwankende Verbräuche an Inertisierungsgas über eine feste Einstellung der Dosiervorrichtung 6 auf die maximale Leistung der Entnahmequelle 3 vorgegeben werden. In einer Vorrichtung dieser Art können auch mehrere Reaktoren angeschlossen sein, von denen nicht alle gleichzeitig in Betrieb sind. Bei der Zuschaltung mehrerer Reaktoren muß die Menge an zuführendem Argon nach der Spitzenbelastung eingestellt sein.

Im Falle einer Unterversorgung der Reaktoren durch die Entnahmequelle 3 sinkt der Druck im Mischorgan 4. Bei der in Figur 2 dargestellten Ausführungsform wird dann über den Drucksensor 12 der Regelkreis, welcher über den Durchflußmesser 5 reguliert wird, überbrückt und der Fluß durch den Drucksensor 12 gesteuert. Alternativ kann gemäß Figur 1 die Dosiervorrichtung 6 den Fluß regulieren, indem die Zufuhr durch Steuerung aus Signalen des Durchflußmessers 5 der Menge an durchlaufendem Stickstoff angepaßt wird. Als Entnahmequelle 7 dient vorzugsweise ein Flüssig-Argontank. Aus ihm kann die Zudosierung von Argon zum Stickstoff erfolgen. Zusätzlich ist der Flüssig-Argontank über eine weitere Rohrleitung 9 mit dem Mischorgan 4 verbunden. Für den Fall, daß die Entnahmemenge aus dem Mischorgan 4 durch den Abschnitt der Rohrleitung, der das Mischorgan 4 und den Reaktor 1 verbindet, größer ist als die Entnahmequelle 7 bei maximaler Entnahmekapazität über die Dosiervorrichtung 6 liefern kann, kann durch die Entnahmequelle 7 eine weitere Inertisierung über die Rohrleitung 9, die hierfür mit einem größeren Rohrquerschnitt ausgelegt ist, gewährleistet werden. Hierzu ist in der Rohrleitung 9 eine Regelvorrichtung 11 angeordnet, die einen Druckabfall durch mangelnde Stickstoffversorgung im Mischorgan 4 registriert und darauf eine stärkere Argon-Entnahme aus der Entnahmequelle 7 einleitet. Diese Einrichtung, die für den Notfall vorgesehen ist, hat weiterhin den Vorteil, daß noch günstigere Bedingungen für die Inertisierung geschaffen werden. Die im Vergleich zum Inertisierungsgasgemisch wesentlich schwerere Komponente sinkt schnell auf das zu schützende Produkt ab und bewirkt insbesondere bei geöffnetem Reaktor einen nach wir vor sicheren Schutz.

Die Dichte des Inertisierungsgases soll im Idealfall einen Wert annehmen, der über der der Umgebungsluft und unterhalb der Dichte der Atmosphäre des Reaktorinnenraumes liegt, die beispielsweise aufgrund der Sättigung des Inertisierungsgases mit Lösungsmitteldämfen sehr hoch sein kann. Die Wahl der zuzumischenden Inertgase hängt in starkem Maße von den Medien im Behälter ab. CO₂ wird häufig aufgrund der chemischen Randbedingungen ausscheiden. Ar hingegen wird häufig das Gas der Wahl sein, da es häufig eine niedrigere Dichte als das Gemisch aus Lösungsmitteldämpfen, Inertgas und Restbestandteilen aus der Umgebungsluft, hat. Eine Durchmischung von Inertgas und schwererer Behälteratmosphäre wird somit verhindert, so daß eine saubere Überschichtung erfolgt die eine sichere Inertisierung gewährleistet. Die Dichte des Inertisierungsgases kann auch individuell auf die Dichteverhältnisse von Reaktorkopfinhalt und der Umgebungsluft eingestellt werden. Selbstverständlich kommen für die dichteregulierte Inertisierung auch andere geeignete Inertgase in Frage. Durch das erfindungsgemäße Verfahren und die Vorrichtung wird in jedem Fall ein geringerer Inertgasverbrauch gewährleistet. Dies soll an einem Beispiel wie folgt gezeigt werden:

Tabelle I zeigt Wertepaare für den Stickstoffverbrauch als Ergebnis einer Inertisierung mit reinem Stickstoff für verschiedene Öffnungsdurchmesser eines Reaktores. Sie bezieht sich wie die folgende Tabelle II auf eine Inertisierung nach dem Verfahren der noch nicht veröffentlichten deutschen Patentanmeldung P 44 13 074.041.

**Tabelle I**

| Durchmesser mm | N₂-Verbrauch m³/h |
|---|---|
| 100 | 1,5 |
| 300 | 11 |
| 450 | 25 |
| 600 | 40 |

Tabelle II zeigt die Verbrauchswerte für Stickstoff und Argon des erfindungsgemäßen Verfahrens für eine Inertisierung, bei der die gleichen Sauerstoff-Grenzwerte eingehalten wurden wie bei den Werten in Tabelle I. Die Zusammensetzung eines Inertisierungsgases für die Durchführung des erfindungsgemäßen Verfahrens war in diesem Fall: Stickstoff 90 Vol%, Argon 8 Vol%, Rest-Sauerstoff 2 Vol%.

**Tabelle II**

| Durchmesser mm | N₂-Verbrauch m³/h | Ar-Verbrauch m³/h | N₂-Einsparung m³/h |
|---|---|---|---|
| 100 | 0,5 | 0,04 | 1 |
| 300 | 3 | 0,24 | 8 |
| 450 | 6 | 0,48 | 19 |
| 600 | 10 | 0,80 | 30 |

Vergleichbare Ergebnisse werden mit einem Inertisierungsgas der Zusammensetzung Stickstoff 92 Vol%, CO₂ 6 Vol% und Rest-Sauerstoff 2 Vol% erreicht.

Die Ziele der Erfindung lassen sich in der Regel schon erreichen, wenn die Dichte des zugeführten Inertisierungsgasgemisches nur geringfügig, vorzugsweise weniger als 2 bis 5 %, über der Dichte der Umgebungsluft liegt. Die Grenze von 2 % ist durch die Möglichkeiten der Regelung bedingt. Die obere Grenze ist allein durch wirtschaftliche Überlegungen bedingt und kann auch höher sein, z.B. 15 %.

Wie aus den Tabellen zu entnehmen ist, ist der unmittelbare Vorteil des erfindungsgemäßen Verfahrens ein deutlich reduzierter Inertisierungsgasverbrauch und somit eine erhebliche Kostenersparnis. Dies gilt auch noch dann, wenn zur Versorgung mit der Zweiten Komponente höherer Dichte ein Flüssigkeitstank anstelle einer Versorgung mit Gasflaschen eingesetzt wird. Der Flüssigkeitstank für die zweite Komponente bietet dafür die zusätzliche Sicherheit einer backup-Versorgung für den Ernstfall, bei dem die Versorgung mit der Hauptkomponente ausfällt oder ein Spitzenbedarf gedeckt werden muß. In einem solchen Ernstfall ist der Verbrauch an der schwereren Komponente geringer gegenüber der Versorgung mit einem konventionellen, leichten Inertisierungsgas, da erfindunggemäß eine bessere Abschirmung des vor Brand zu schützenden Gutes durch die höhere Dichte des schwereren Inertisierungsgases erfolgt. Dies führt zu weiteren Ersparnissen. Durch den Einsatz einer on-site-Versorgung durch die Hauptkomponente wird ein Tank und dessen regelmäßige Befüllung eingespart, so daß insgesamt ein Kostenvorteil entsteht.

Ein weiterer Vorteil des erfindungsgemäßen Verfahrens ist die Reduktion der Gasbewegung im Kopfraum des Reaktors beziehungsweise des zu inertisierenden Systems, mit der Folge noch weiterer Minderung von Staubaustrag. Im Einzelfall wird auch eine Verringerung der gegebenenfalls notwendigen Reaktorabsaugung erreicht, mit der Folge, daß geringere Mengen am Abgas und geringere Verluste an z.B. Lösemitteln durch das Abgas entstehen.

## Patentansprüche

1. Verfahren zum Inertisieren von brennbare Substanzen enthaltenden, zumindestens zeitweise geöffneten Reaktoren (1), bei welchem Stickstoff als Inertisierungsgas in den Innenraum des Reaktors eingeleitet wird, dadurch gekennzeichnet,
daß neben der Hauptkomponente Stickstoff mindestens ein weiteres Inertisierungsgas als Zusatzkomponente zugeführt wird mit der Maßgabe, daß die Dichte des zugeführten Inertgasgemisches über der Dichte der Umgebungsluft liegt.

2. Verfahren nach Anspruch 1,
dadurch gekennzeichnet,
daß die Dichte des zugeführten Inertisierungsgasgemisches nur geringfügig, vorzugsweise weniger als 2 bis 5 %, über der Dichte der Umgebungsluft liegt.

3. Verfahren nach Anspruch 1 oder 2,
dadurch gekennzeichnet,
daß Argon und/oder Kohlendioxid als Zusatzkomponente zugeführt wird.

4. Verfahren nach einem der Ansprüche 1 bis 3,
dadurch gekennzeichnet,
daß die Hauptkomponente Stickstoff simultan vor Ort erzeugt wird.

5. Vorrichtung zur Durchführung der Verfahren nach den Ansprüchen 1 bis 4, mit mindestens einem Reaktor (1), einer Entnahmequelle (3) für Stickstoff und einer Rohrleitung (2), die den Stickstoff dem Reaktor (1) zuführt,
dadurch gekennzeichnet,
daß zwischen dem Reaktor (1) und der Entnahmequelle (3) für Stickstoff ein Mischorgan (4) angeordnet ist, das mit mindestens einer weiteren Entnahmequelle (7) für ein zusätzliches Inertisierungsgas durch mindestens eine Rohrleitung (8, 9) in Verbindung steht.

6. Vorrichtung nach Anspruch 5,
dadurch gekennzeichnet,
daß das Mischorgan (4) als Pufferbehälter ausgebildet ist.

7. Vorrichtung nach Anspruch 5 oder 6,
dadurch gekennzeichnet,
daß eine der das Mischorgan (4) mit der Entnahmequelle (7) verbindenden Rohrleitungen (9) mit einer Regelvorrichtung (10) ausgestattet ist, die bei Abfall des Druckes des Mischorgans (4) mittels eines Drucksensors (12) auf den Betrieb aus der Entnahmequelle (7) umstellt.

8. Vorrichtung nach einem der Ansprüche 5 bis 7,
dadurch gekennzeichnet,
daß zwischen der Entnahmequelle (3) für Stickstoff und dem Mischorgan (4) ein Durchflußmesser (5) angeordnet ist, der über eine Steuerleitung mit einer Dosiereinrichtung (6) in Verbindung steht, die in einer der das Mischorgan (4) mit der Entnahmequelle (7) verbindenden Rohrleitung (8) angeordnet ist.

9. Vorrichtung nach Anspruch 5 oder 6, bei welcher nur eine das Mischorgan (4) mit der Entnahmequelle (7) für das zusätzliche Inertisierungsgas verbindende Rohrleitung (9) vorgesehen ist und in der Rohrleitung (2) ein Durchflußmesser (5) vorhanden ist,
dadurch gekennzeichnet,
daß die Rohrleitung (9) mit einer Regeleinheit (11) ausgestattet ist, die einerseits über eine Steuerleitung mit dem Durchflußmesser (5) als Signalgeber in Verbindung steht und die andererseits über einen mit dem Mischorgan (4) in Verbindung stehenden Drucksensor (12) verfügt, um bei Abfall des Druckes im Innern des Mischorgans (4) auf Versorgung aus der Entnahmequelle (7) umstellen zu können.

10. Vorrichtung nach einem der Ansprüche 5 bis 9,
dadurch gekennzeichnet,
daß die Entnahmequelle (3) für Stickstoff eine on-site-Anlage ist.

11. Vorrichtung nach einem der Ansprüche 5 bis 9,
dadurch gekennzeichnet,
daß die Entnahmequelle (3) für Stickstoff ein Flüssigkeitstank ist.
